# EUROPÄISCHE PATENTANMELDUNG

(11) **EP 0 524 474 A2**
(43) Veröffentlichungstag der Anmeldung: **27.01.1993**
(21) Anmeldenummer: 92111404.7
(22) Anmeldetag: 06.07.1992
(51) Int. Cl.: H04N 7/14

(54) **Bildfernsprecher**

(30) Priorität: 26.07.1991 DE 4124782
(71) Anmelder: Alcatel SEL Aktiengesellschaft, D-70435 Stuttgart (DE)
(72) Erfinder: Deeg, Reinhard, W-7538 Keltern 2 (DE); Ingilisoff, Orlin, W-7000 Stuttgart 40 (DE)
(74) Vertreter: Knecht, Ulrich Karl

(57) **Zusammenfassung**

Bei einem in die Tischplatte eines Arbeitplatzes integrierten Bildfernsprecher ist eine Bildröhre vertikal in der Tischplatte versenkt angeordnet. Ein über einen Schaft ausfahrbarer in der Neigung verstellbarer halbdurchlässiger Spiegel ist oberhalb der Bildröhre angeordnet und reflektiert das Schirmbild zur Bedienungsperson. Je nach Augenhöhe dieser Person wird der über eine erste Spindel in eine stets gleiche Stellung ausgefahrene Spiegel über eine zweite Spindel durch Neigen auf die Augenhöhe der Bedienungsperson eingestellt.

Gemäß der Erfindung ist nur eine Spindel vorgesehen, die aus zwei Spindelteilen (4a, 4b) mit unterschiedlicher Gewindesteigung besteht. Über den einen Teil (4a) wird der Schaft (7) ausgefahren. Über den anderen Teil (4b) erfolgt eine kontinuierliche Veränderung des Neigungswinkels vom Spiegel (14), der sich aus dem Differenzhub (Hd) der beiden Spindelteile (4a, 4b) ergibt. Die Gewindesteigungen der beiden Spindelteile (4a, 4b) sind so aufeinander abgestimmt, daß der Beobachtungswinkel (β) für eine Person mit maximaler Augenhöhe und für eine Person mit geringer Augenhöhe gleich klein ist.

## Beschreibung

Die Erfindung geht von einem Bildfernsprecher gemäß dem Oberbegriff des Anspruchs 1 aus.

Der Bildprospekt "SEL Bildtelefon BF 4100" der Anmelderin vom Februar 1991 zeigt und beschreibt ein in einen Arbeitsplatz integriertes Teilnehmerendgerät zum Bildfernsprechen. Der Bildanzeige- und Aufnahmeteil besteht aus einer in die Tischplatte des Arbeitsplatzes eingelassenen Bildröhre mit im wesentlichen vertikal ausgerichteter Mittelachse und einem schwenkbar an einem vertikal verstellbaren Schaft befestigten Träger für einen halbdurchlässigen Spiegel (achromatischer Lichtteiler 50/50%) und für eine Videokamera, weiterhin als Spiegelträger bezeichnet. Die elektrooptische Funktion ist im einzelnen in der DE 34 31 902 A1 beschrieben. Bei abgeschaltetem Bildteil liegt der Träger mit der Spiegelseite auf der Tischplatte auf. Er deckt dabei die durch die eingelassene Bildröhre bedingte Ausnehmung ab. Der Spiegelträger ist am oberen Ende des in der Tischplatte versenkt angeordneten Schafts befestigt. Durch eine motorbetriebene Spindel ist der Schaft senkrecht ausfahrbar. Über eine zweite motorbetriebene Spindel ist die Winkelstellung des Spiegelträgers auf die Augenhöhe der jeweiligen Bedienungsperson einstellbar. Der Schaft nimmt immer die gleiche Position ein, so daß die individuelle Einstellung ausschließlich über die Neigung des Spiegelträgers erfolgt. Die Ausfahrhöhe des Schafts kann dabei nur bis zu einer Höhe erfolgen, von der aus der Spiegelträger sowohl auf eine Person mit maximaler Augenhöhe als auch auf eine Person mit geringer Augenhöhe einstellbar ist. Hierbei kann der Forderung nach einem möglichst geringen Beobachtungswinkel über den Spiegel zur Bildschirmmitte nicht optimal entsprochen werden. Zudem erfordern die zwei Motore einen doppelten Steuerungsaufwand.

Die Aufgabe der Erfindung besteht darin, die Einstellung des Spiegelträgers bei einem verringerten Steuerungsaufwand zu optimieren.

Die Aufgabe wird durch die im Anspruch 1 angegebenen Merkmale gelöst. Die Unteransprüche zeigen vorteilhafte Ausgestaltungen des Erfindungsgegenstandes auf.

Die durch die Erfindung erzielten Vorteile bestehen insbesondere darin, daß durch die feste Kopplung der Schwenkbewegung des Spiegelträgers an die Hubbewegung des Schafts bei einer entsprechenden Wahl der Gewindesteigung der beiden Spindeln eine optimierte Einstellung auf die Augenhöhe der jeweiligen Bedienungsperson möglich ist und daß zur Steuerung der Einstellung nur ein Motor benötigt wird.

Anhand eines Ausführungsbeispiels wird die Erfindung in Verbindung mit den Zeichnungen nachfolgend näher erläutert. Es zeigt:
- Fig. 1 und Fig. 2: den Bildteil eines Bildfernsprechers gemäß der Erfindung im abgesenkten bzw. ausgefahrenen Zustand des Spiegelträgers,
- Fig. 3: eine vergrößerte Darstellung der Fig. 2,
- Fig. 4: die Fig. 3 im Schnitt IV - IV,
- Fig. 5: die Fig. 3 im Schnitt V - V,

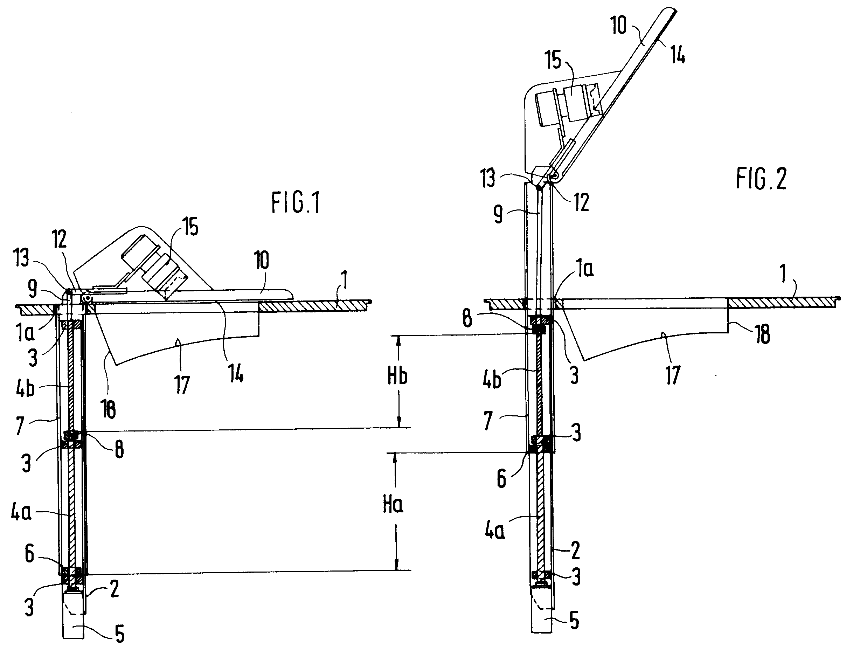

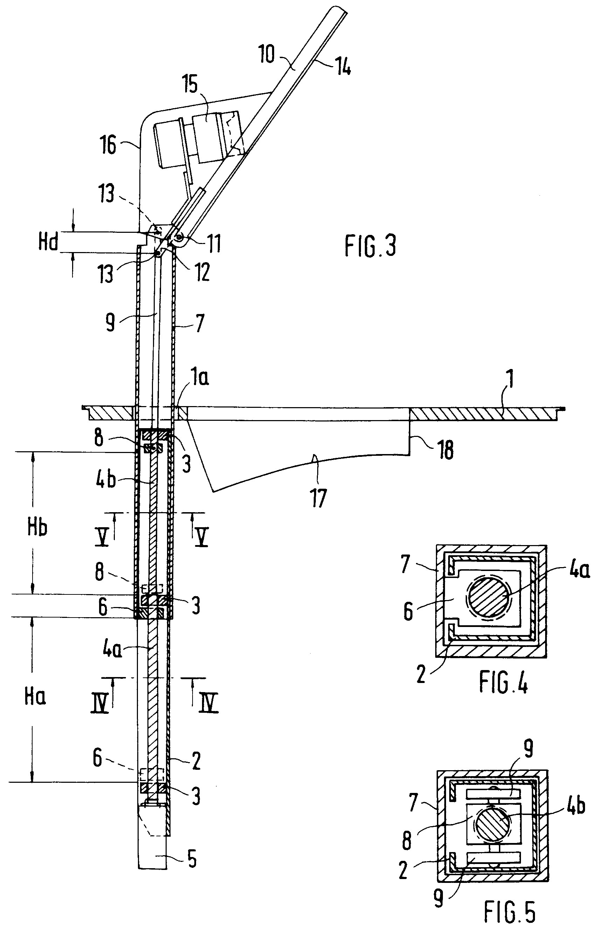

- Fig. 5: den Bildteil des Bildfernsprechers gemäß Fig. 2 in einer Ausfahrstellung des Spiegelträgers für eine Bedienungsperson mit geringer Augenhöhe.

Die Fig. 1 und 2 zeigen in vereinfachter Darstellung den Bildteil eines in einen Arbeitsplatz integrierten Bildfernsprechers im Querschnitt. Aus Übersichtlichkeitsgründen erfolgt nur eine teilweise Schnittdarstellung. Die Tischplatte 1 des Arbeitsplatzes hat eine Ausnehmung 1a, in die ein U-förmiger Träger 2 eingelassen ist. Letzterer ist in nicht dargestellter Weise am unteren Ende befestigt. Im Träger 2 ist in ortsfesten Lagern 3 eine Spindel 4a/4b drehbar gelagert, die durch einen Motor 5 antreibbar ist. Die Gewinde der Spindelteile 4a und 4b haben unterschiedliche Steigungen. Auf dem Träger 2 ist ein rohrförmiger Schaft 7 geführt, der über eine Mutter 6 auf dem Spindelteil 4a höhenverstellbar ist. Am oberen Ende des Schafts 7 ist ein Träger 10 angelenkt (Drehpunkt 11), der auf der einen Seite einen halbdurchlässigen Spiegel 14 hat und an dem auf der anderen Seite eine Videokamera 15 befestigt ist. Dieser Träger wird weiterhin mit Spiegelträger 10 bezeichnet. Eine auf dem Spindelteil 4b höhenverstellbare Mutter 8 ist über ein Koppelgestänge 9 mit einem Ausleger 12 am Spiegelträger 10 gelenkig verbunden (Pos. 13). Von der Bedienungseite aus gesehen ist vor der Ausnehmung 1a in die Tischplatte 1 eine in einem Lichtschacht 18 versenkt angeordnete Bildröhre mit im wesentlichen senkrechter Achse eingelassen. Die Darstellung der Bildröhre ist auf die Oberfläche 17 des Bildschirms beschränkt.

Fig. 1 zeigt den Bildteil in der Ruhestellung, in der der Spiegelträger 10 die durch die Bildröhrenabmessung bedingte Ausnehmung in der Tischplatte 1 aufliegend abdeckt. Der Schaft 7 ist eingefahren. Die Muttern 6 und 8 befinden sich in der jeweils unteren Endlage. Demgegenüber zeigt Fig. 2 den Bildteil in der Arbeitsstellung für eine Bedienungsperson mit maximaler Augenhöhe, in der der Schaft 7 voll ausgefahren ist und der Spiegelträger 10 den geringsten Neigungswinkel hat. Die Muttern 6 und 8 befinden sich in der jeweils oberen Endlage. Bedingt durch die unterschiedliche Steigung der Gewinde der Spindelteile 4a und 4b ist auch der Hub Ha und Hb der Muttern 6 und 8 zwischen den Endlagen verschieden lang. Die Hubdifferenz bestimmt den Neigungswinkel des Spiegelträgers, wie nachfolgend noch näher beschrieben wird.

Fig. 3 zeigt die Fig. 2 in einem vergrößerten Maßstab, während die Fig. 4 die Fig. 3 im Schnitt IV-IV und die Fig. 5 die Fig. 3 im Schnitt V-V zeigt.

Die vergrößerte Darstellung der Fig. 3 läßt Einzelheiten der vorbeschriebenen Hubmechanik deutlicher erkennen. Der auf dem feststehenden Träger 2 vertikal geführte Schaft 7 befindet sich in der ausgefahrenen Endstellung. In dieser hat die auf dem Spindelteil 4a geführte Mutter 6 und auf dem Spindelteil 4b geführte Mutter 8 entsprechend der unterschiedlichen Gewindesteigung der beiden Spindelteile 4a und 4b einen unterschiedlichen Hub Ha bzw. Hb ausgeführt. Im vorliegenden Fall ist der Hub Ha aufgrund der größeren Gewindesteigung des Spindelteils 4a größer als der Hub Hb. Bei einer denkbaren anderen Anlenkung des Koppelgestänges 9 an den Spiegelträger 10 ist auch ein umgekehrtes Verhältnis der Gewindesteigung der Spindelteile 4a und 4b denkbar. Entscheidend ist, daß ein dem gewünschten Übersetzungsverhältnis entsprechender Differenzhub zwischen Ha und Hb besteht.

Bei dem beispielsweisen Verhältnis der Gewindesteigung der Spindelteile 4a und 4b ergibt sich ein Differenzhub Hd, um den der Hub Hb der Mutter 8 auf dem Spindelteil 4b geringer ist als der Hub Ha der Mutter 6 auf dem Spindelteil 4a. Mit dem Ausfahren des Schaft 7 entsteht der Differenzhub Hd kontinuierlich bis zur Maximalgröße in der Endstellung des Schafts 7. Damit wird der Spiegelträger 10 aus der Auflageposition gemäß Fig. 1 mit dem Ausfahren des Schafts 7 gleichmäßig in die in Fig. 3 gezeigte Position gebracht.

Die Fig. 4 und 5 zeigen die vorbeschriebene Hubmechanik in den Schnitten IV-IV bzw. V-V. Fig. 4 läßt die Führung des Schafts 7 auf dem U-förmigen Träger 2 erkennen, sowie die mit dem Schaft 7 fest verbundene Mutter 6, die auf dem Spindelteil 4a längsgeführt ist. Fig. 5 läßt die Anlenkung des Koppelgestänges 9 an die Mutter 8 erkennen, die auf dem Spindelteil 4b längsgeführt ist.

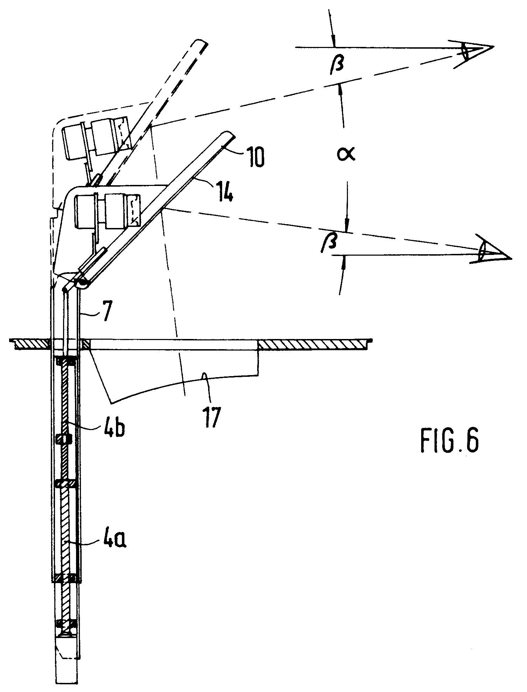

Fig. 6 zeigt den Bildteil des Bildfernsprechers gemäß Fig. 2 in einer Ausfahrstellung des Spiegelträgers 10 für eine Bedienungsperson mit geringer Augenhöhe. Zum Vergleich ist die Ausfahrstellung für eine Person mit maximaler Augenhöhe strichliniert dargestellt. Der Winkel α zwischen diesen beiden extremen Spiegelträgerstellungen ist auf 20° beschränkt. Bei geringer Augenhöhe wird der Schaft 7 nur teilweise ausgefahren und zwar nur soweit, daß die Neigung des Spiegelträgers 10 einen optimalen, d.h. möglichst geringen Beobachtungswinkel β über den Spiegel 14 zur Mitte der Bildschirmoberfläche 17 ermöglicht.

## Patentansprüche

1. Bildfernsprecher mit einer Vorrichtung zum Steuern der Höhenverstellung eines Spiegelträgers durch eine Mutter auf einer ersten Spindel und der Schwenkbewegung des Spiegelträgers durch eine Mutter auf einer zweiten Spindel,
**dadurch gekennzeichnet,** daß die erste und die zweite Spindel unterschiedliche Steigung haben und durch einen gemeinsamen Motor (5) mit gleicher Drehzahl angetrieben werden.

2. Bildfernsprecher nach Anspruch 1, dadurch gekennzeichnet, daß die erste und die zweite Spindel achsparallel zueinander verlaufen.

3. Bildfernsprecher nach Anspurch 1, dadurch gekennzeichnet, daß die erste und zweite Spindel Teile (4a, 4b) einer Spindel sind.

4. Bildfernsprecher nach Anspruch 1, 2 oder 3, dadurch gekennzeichnet, daß die Steigung der zweiten Spindel kleiner ist als die der ersten Spindel.

5. Bildfernsprecher nach Anspruch 1, 2 oder 3, dadurch gekennzeichnet, daß die Steigung der zweiten Spindel größer ist als die der ersten Spindel.
